# EUROPÄISCHE PATENTSCHRIFT

(11) **EP 3 376 170 B1**
(45) Veröffentlichungstag und Bekanntmachung des Hinweises auf die Patenterteilung: **16.06.2021**
(21) Anmeldenummer: 18161952.9
(22) Anmeldetag: 15.03.2018
(51) Int. Cl.: G01D 5/353

(54) **SENSORSYSTEM ZUM ÜBERWACHEN VON DRUCKKRAFT- UND FEUCHTIGKEITSVERÄNDERUNGEN AUF EINE TEXTILE UNTERLAGE UND VERFAHREN ZUR ANWENDUNG DES SENSORSYSTEMS**
SENSOR SYSTEM FOR MONITORING CHANGES TO PRESSURE AND MOISTURE ON A TEXTILE PAD AND A METHOD FOR APPLICATION OF THE SENSOR SYSTEM
SYSTÈME CAPTEUR DESTINÉ À LA SURVEILLANCE DE FORCE DE PRESSION ET DE CHANGEMENT D'HUMIDITÉ SUR UN SUPPORT TEXTILE ET PROCÉDÉ D'APPLICATION DUDIT SYSTÈME CAPTEUR

(30) Priorität: 15.03.2017 DE 102017105575
(43) Veröffentlichungstag der Anmeldung: 19.09.2018
(73) Patentinhaber: Institut für Holztechnologie Dresden gemeinnützige GmbH, 01217 Dresden (DE)
(72) Erfinder: Blüthgen, Lars, 01936 Neukirch (DE); Wiedemann, Jens, 01069 Dresden (DE); Rehm, Mathias, 01217 Dresden (DE); Kuhne, Dr. Michael, 99423 Weimar (DE); Ulanov, Alexander, 99423 Weimar (DE); Thiel, Enrico, 99423 Weimar (DE); Thiele, Elke, 09125 Chemnitz (DE)
(74) Vertreter: Sperling, Thomas

(56) Entgegenhaltungen:
- EP-A1- 2 267 204
- DE-A1- 3 327 158
- DE-A1- 3 817 269
- DE-A1- 4 011 440
- DE-A1-102004 010 437
- DE-A1-102006 046 778
- DE-A1-102006 048 635
- KR-B1- 101 439 463

## Beschreibung

Die Erfindung betrifft ein Sensorsystem zum Überwachen von Druckkraft- und Feuchtigkeitsveränderungen auf eine textile Unterlage und ein Verfahren zur Anwendung des Sensorsystems, insbesondere zur Überwachung von Erfordernissen der Pflege und der medizinischen Versorgung eines Patienten.

Sensorsysteme zur Überwachung von Druckkraft- und Feuchtigkeitsveränderungen auf eine Unterlage kommen in verschiedenen Bereichen der Technik zum Einsatz. So werden Druckkraftsensoren oder Feuchtigkeitssensoren beispielsweise im Bereich der Pflege eingesetzt, um eine Patientenüberwachung zu erleichtern und die Arbeit des Personals zu unterstützen. Die bisher bekannten Sensorlösungen, welche üblicherweise auf elektrischen Sensoren oder auf glasfaseroptischen Sensoren basieren, erweisen sich für verschiedene Anwendungen, insbesondere im Bereich der Pflege, als nachteilig. So besteht beispielsweise bei elektrischen Sensoren das Problem einer Störempfindlichkeit gegenüber anderen elektrischen Geräten der Umgebung, so dass jeweils eine aufwendige Abschirmung von elektrischen Leitern erforderlich ist. Problematisch ist weiterhin, dass elektrische Signale empfindlich auf Feuchtigkeit reagieren, so dass aufwendige Steckverbindungen vorgesehen werden müssen, um einen Feuchtigkeitseintritt vermeiden zu können. Außerdem ist es nachteilig, dass für die Bestimmung von Druckkraft- und Feuchtigkeitsveränderungen üblicherweise verschiedene Sensorsysteme eingesetzt werden müssen, was den Aufwand eines sensorischen Überwachungssystems ebenfalls erhöht.

Bei der Verwendung von glasfaseroptischen Sensoren erweist sich die aufwendige Verbindungstechnik als nachteilig, da zum Verbinden jeweils ein Spleißen und Verschmelzen der im Lichtkern nur 5 µm bis 9 µm dicken Glasfasern erforderlich ist. Darüber hinaus ist ein glasfaseroptisches Messsystem, wie beispielsweise eine Faser-Bragg-Gitter Sensorik, vergleichsweise kostenintensiv.

Aus dem Stand der Technik ist ein System zur Erfassung von Druck aus der KR 101 439 463 B1 bekannt, welches mehrere optische Lichtleitfasern aufweist. Dabei sind mehrere erste optische Lichtleitfasern parallel, in einer Ebene, zueinander beabstandet angeordnet und mehrere zweite Lichtleitfasern sind senkrecht dazu, ebenfalls zueinander beabstandet positioniert. Die ersten und die zweiten Lichtleitfasern bilden so eine netzartige Matte aus Lichtleitfasern, in welche Licht von den Enden der Lichtleitfasern her einkoppelbar ist. Das System weist ferner Detektoren auf, welche die optischen Signale in elektrische umwandeln, sodass diese dann weitergeleitet und ausgewertet werden können. Das beschriebene Druckerfassungssystem basiert im Wesentlichen darauf, dass ein Druck die Lichtleitfasern verformt, wodurch die optischen Eigenschaften der Lichtleitfasern verändert werden. Aufgrund dessen verändert sich die Menge an ausgekoppeltem Licht mit dem ausgeübten Druck und es können somit Druckveränderungen erfasst werden. Ferner kann mit einer solchen Vorrichtung aufgrund der zweidimensionalen Ausrichtung der Lichtleitfasern auch eine Druckverteilung bestimmt werden.

Eine optische Sensoreinrichtung, welche einen gekrümmten Lichtwellenleiter aufweist, ist in der DE 10 2004 010437 A1 beschrieben. Die Krümmung des Lichtwellenleiters resultiert aus einer Aufwicklung des Lichtwellenleiters um ein längliches Trägerelement. Da der Lichtwellenleiter gleichmäßig aufgewickelt ist, stellt sich ein Modengleichgewicht und ein daraus resultierendes Auskopplungsverhalten ein. Bei einem auf das Trägerelement einwirkenden Druck kommt es zu einer wenigstens abschnittsweisen Änderung des Wickelradius des Lichtwellenleiters, was einen deutlichen Einfluss auf die optischen Eigenschaften des Lichtwellenleiters und die sich im Lichtwellenleiter ausbildenden Moden hat. Folglich können aufgrund des ausgekoppelten Lichtes Rückschlüsse auf den einwirkenden Druck gezogen werden.

Aus DE 38 17 269 A1 ist ein optischer Weggeber zur Erkennung der Augenblickslage eines beweglichen Elements bekannt, bei dem der Lichtverlust in gekrümmt geführten Lichtwellenleitern ausgenutzt wird. Ferner geht aus DE 38 17 269 A1 hervor, langgestreckte Lichtwellenleiter zum Erkennen physikalischer Zustände von Fluiden zu verwenden.

DE 3327158 A1 offenbart einen optischen Detektor mit einer Lichtleitfaser zur Erfassung einer Temperatur und/oder Luftfeuchte, aufgrund von mechanischen Spannungen durch Volumenänderungen in einem Körper, in dem die Lichtleitfaser in einem Messbereich eingebettet ist.

Die bekannten Sensorsysteme haben weiter zum Nachteil, dass eine schnelle und unkomplizierte Austauschbarkeit oder eine Reinigungsmöglichkeit nicht oder nur mit erhöhtem Aufwand gegeben ist. So müssen beim Reinigen oder Waschen von Komponenten mit elektrischen Kontakten besondere Vorkehrungen getroffen werden, um einen Feuchtigkeitseintritt zu vermeiden. Bei glasfaseroptischen Sensoriken verhindert eine aufwendige Verbindungstechnik eine einfache und schnelle Austauschbarkeit von Sensorkomponenten.

Es ist daher Aufgabe der Erfindung, ein Sensorsystem zum Überwachen von Druckkraft- und Feuchtigkeitsveränderungen auf eine textile Unterlage vorzuschlagen, mit dem die Nachteile bekannter Sensorsysteme vermieden werden können. Ferner ist es Aufgabe, ein Verfahren zur Anwendung des Sensorsystems für den Bereich der Pflege vorzuschlagen.

Die Aufgabe wird durch ein Sensorsystem mit den Merkmalen gemäß Patentanspruch 1 und ein Verfahren mit den Merkmalen gemäß Anspruch 14 gelöst. Weiterbildungen und Ausführungsvarianten sind in den jeweils abhängigen Patentansprüchen angegeben.

Das erfindungsgemäße Sensorsystem zum Überwachen von Druckkraft- und Feuchtigkeitsveränderungen auf eine textile Unterlage weist ein mit einem strangförmigen elastischen Trägermaterial und einer auf dem Trägermaterial angeordneten polymeroptischen Lichtleitfaser gebildetes Sensorelement auf, das zur Integration in eine textile Unterlage vorgesehen ist. Aufgrund des strangförmigen elastischen Trägermaterials ist das Sensorelement gut in textile Gebilde integrierbar. Weiterhin weist das erfindungsgemäße Sensorsystem eine breitbandige Lichtquelle und ein Detektorelement auf, wobei die Lichtquelle zur Lichteinkopplung mit einem Ende der polymeroptischen Lichtleitfaser des Sensorelements verbunden ist und das Detektorelement zur Erfassung eines Intensitätssignals des durch die polymeroptische Lichtleitfaser geleiteten Lichts mit dem anderen Ende der polymeroptischen Lichtleitfaser verbunden ist. Bestandteil des erfindungsgemäßen Sensorsystems ist außerdem eine Auswertungseinrichtung, mit der einem zeitlichen Verlauf eines von dem Detektorelement gelieferten Intensitätssignals zumindest eine Feuchtigkeitsveränderung und/oder eine Druckkraftveränderung zuordenbar ist/sind. Vorgesehen ist weiterhin eine Benachrichtigungseinrichtung zum Anzeigen der Feuchtigkeitsveränderung und/oder der Druckkraftänderung.

Als Unterlage ist im Sinne der Erfindung ein textiles flächiges Gebilde zu verstehen, welches separat einteilig oder als ein Bestandteil eines mehrteiligen Gebildes eingesetzt wird und dazu dient, um es unter einen Gegenstand oder eine Person zu platzieren. Eine Matratze, ein gepolstertes Sitzmöbel oder ein Überzug für eine Matratze oder ein Möbel können daher ebenfalls als eine im Sinne der Erfindung zu verstehende Unterlage gesehen werden.

Die erfindungsgemäße Lösung beruht auf einem lichtbasierten Sensorprinzip, bei dem zum Erfassen von Änderungen zumindest einer Feuchtigkeit oder einer Druckkraft ausgenutzt wird, dass sich Lichtreflexionen des von der Lichtquelle in die polymeroptische Lichtleitfaser eingekoppelten Lichts bei einem Flüssigkeitskontakt und/oder bei einer Querschnittsdeformation durch Krafteinwirkung, wie zum Beispiel durch Verbiegen, innerhalb der polymeroptischen Lichtleitfaser ändern, wodurch sich die von dem Detektorelement detektierbare Lichtsignalintensität ändert. Eine Druckkraftbeanspruchung des Sensorelements verursacht eine Querschnittsdeformierung der polymeroptischen Lichtleitfaser, wobei Licht über den Umfang der polymeroptischen Lichtleitfaser ausgekoppelt wird, was als Intensitätssignalveränderung detektierbar ist. Bei einem Flüssigkeitskontakt mit der polymeroptischen Lichtleitfaser ändert sich das Umgebungsmedium an der Grenzfläche der polymeroptischen Lichtleitfaser, wodurch es zu einer dauerhaften Lichtauskopplung über den Umfang der polymeroptischen Lichtleitfaser kommt. Durch die Auswertung mit der Auswertungseinrichtung werden die zeitlichen Verläufe von Intensitätssignalveränderungen unterschieden und zumindest einer Druckkraftveränderung oder einer Feuchtigkeitsveränderung zugeordnet.

Um eine Lichtauskopplung bei Flüssigkeitskontakt oder bei Querschnittsdeformation gewährleisten zu können, wird eine polymeroptische Lichtleitfaser eingesetzt, die keinen Fasermantel oder einen unterbrochenen Fasermantel aufweist.

Mit der Auswertungseinrichtung ist ein zeitlicher Verlauf einer durch einen Flüssigkeitskontakt mit dem Sensorelement und/oder durch eine Querschnittsdeformation des Sensorelements hervorgerufenen Intensitätssignalveränderung erfassbar, wobei eine Feuchtigkeitsveränderung und/oder eine Druckkraftveränderung anhand eines zeitlichen Verlaufs einer Intensitätsveränderung erkennbar ist. Zur Auswertung des zeitlichen Verlaufs von Intensitätssignalveränderungen können unterschiedliche Algorithmen oder Filter eingesetzt werden. Wiederkehrende oder unregelmäßige Intensitätssignalveränderungen mit kurzen Zeitintervallen sind als Bewegungen identifizierbar. Eine zeitlich einmalig auftretende Intensitätssignalveränderung ist als Feuchtigkeitsveränderung beziehungsweise als Feuchtigkeitsereignis identifizierbar. Aufgrund der Unterscheidbarkeit der zeitlichen Verläufe einer durch Druckkraftbeanspruchung verursachten Intensitätssignalveränderung und einer durch Flüssigkeitskontakt verursachten Intensitätssignalveränderung, können mit einem Sensorelement gleichzeitig Feuchtigkeitsveränderungen und Druckkraftveränderungen ermittelt werden.

Aufgrund des lichtbasierten Sensorprinzips sind für das Sensorelement vorteilhafterweise keine Kapselungen zum Feuchtigkeitsschutz erforderlich. Verbindungen der polymeroptischen Lichtleitfaser mit dem Detektorelement oder der Lichtquelle können aufgrund des in der Regel größer als 0,25 mm gebildeten Lichtleitkerns durch vergleichsweise einfache Steckverbindungen realisiert sein, was eine einfache Integration und Austauschbarkeit des Systems gewährleistet. So kann eine Steckverbindung der polymeroptischen Lichtleitfaser durch Abschneiden und Fixieren in einem Stecker realisiert sein, ohne dass eine aufwendige Verbindungstechnik erforderlich ist. Durch die einfache Lösbarkeit der Steckverbindung der polymeroptischen Lichtleitfaser kann eine Unterlage mit dem darin integrierten Sensorelement auf einfache Weise von dem Detektorelement beziehungsweise der Auswertungseinrichtung getrennt und separat gereinigt beziehungsweise gewaschen werden.

Von Vorteil ist weiterhin, dass aufgrund des Fehlens elektrischer Komponenten im Sensorelement keine elektromagnetischen Felder erzeugt werden, welche Störungen mit weiteren elektrischen Geräten, wie aktive Implantate, Herzschrittmacher, Nervenstimulatoren, Medikamentenpumpen oder Hörprothesen verursachen können.

Das elastische strangförmige Trägermaterial weist eine ausreichend große Flexibilität auf, um das Sensorelement in verschiedenen Anordnungen in eine textile Unterlage zu integrieren. Das Sensorelement kann daher in einer mäanderförmigen oder spiralförmigen Anordnung unter Ausbildung einer Totalreflexion des in die polymeroptische Lichtleitfaser eingekoppelten Lichts integriert werden.

Nach einer bevorzugten Ausführungsvariante des erfindungsgemäßen Sensorsystems kann die polymeroptische Lichtleitfaser um das strangförmige elastische Trägermaterial gewickelt sein, wobei die polymeroptische Lichtleitfaser spiralförmig auf der Oberfläche des elastischen strangförmigen Trägermaterials angeordnet ist.

Weiterhin kann es vorgesehen sein, dass das strangförmige elastische Trägermaterial des Sensorelements ein bei Flüssigkeitskontakt quellfähiges Material aufweist. Als quellfähiges Material kann beispielsweise eine Quellvliessstoffstruktur eingesetzt werden, welche als Trägermaterial in einem Kern-Mantelverfahren (KEMAFIL) mit der polymeroptischen Lichtleitfaser verbunden ist. Bei dieser Ausführungsvariante des Sensorelements kann ein Feuchtigkeitsereignis anhand einer durch die Flüssigkeitsquellung des Trägermaterials verursachten Druckkraftbeanspruchung auf die polymeroptische Lichtleitfaser und damit einhergehende Querschnittsdeformierung der polymeroptischen Lichtleitfaser bestimmt werden, da aufgrund der Querschnittsdeformierung der polymeroptischen Lichtleitfaser eine Intensitätssignalveränderung am Detektorelement detektierbar ist.

Gemäß einer weiteren vorteilhaften Weiterbildung kann das strangförmige elastische Trägermaterial ein temperaturabhängig ausdehnbares Material aufweisen. Bei dieser Ausführungsvariante kann eine Temperaturänderung anhand einer durch die temperaturabhängige Ausdehnung des Trägermaterials verursachte Druckkraftbeanspruchung auf die polymeroptische Lichtleitfaser und damit einhergehende Querschnittsdeformierung der polymeroptischen Lichtleitfaser bestimmt werden, da aufgrund der Querschnittsdeformierung der polymeroptischen Lichtleitfaser eine Intensitätssignalveränderung am Detektorelement erfassbar ist. Kriterien zur Unterscheidung der Signale sind beispielsweise zyklische Änderung der Signale, durch welche die Signale nach Feuchtigkeit und Temperatur unterschieden werden können. Weiterhin ist eine Sprungantwort bei Feuchtigkeitsveränderungen messbar wie auch bei langfristigen Termperaturänderungen. Bei der Bewegungsdetektion liegen die Signaländerungen im Sekundenbereich.

Die polymeroptische Lichtleitfaser kann im Kern vorzugsweise aus Polymethylmethacrylat, Polyacrylat 6.6, oder Polypropylen gebildet sein. Um eine Lichtauskopplung entlang des Umfangs der polymeroptischen Lichtleitfaser zu ermöglichen weist die polymeroptische Lichtleitfaser keinen Mantel oder einen unterbrochenen Mantel aus einem Fluorpolymer auf.

Das elastische strangförmige Trägermaterial bestimmt die Formgebung des Sensorelements. Aufgrund der strangförmigen elastischen Formgebung fügt sich das Sensorelement gut in textile Gebilde ein. Vorzugsweise kann das Sensorelement in eine textile Unterlage eingewebt werden. Das Trägermaterial kann beispielsweise ein Gummi oder ein Silikon enthalten oder vollständig aus einem Gummi oder einem Silikon gebildet sein. Weiterhin kann das Trägermaterial mit einem Vollmaterial oder als Schlauch gebildet sein. Ein kreisrunder Querschnitt des elastischen strangförmigen Trägermaterials ist bevorzugt. Vorzugsweise können das Trägermaterial und die polymeroptische Lichtleitfaser durch ein Kern-Mantel-Verfahren (KEMAFIL) miteinander verbunden sein.

Gemäß einer weiteren vorteilhaften Ausführungsvariante der erfindungsgemäßen Sensoreinrichtung kann es vorgesehen sein, dass die Benachrichtigungseinrichtung zur Informationsübertragung mit einem Drahtlosnetzwerk verbunden ist. Weiterhin kann es vorgesehen sein, dass die Benachrichtigungseinrichtung mit einer weiteren technischen Einrichtung koppelbar ist, wobei die weitere technische Einrichtung als Reaktion auf eine Feuchtigkeitsveränderung und/oder eine Druckkraftänderung einschaltbar ist. Es ist daran gedacht, als weitere technische Einrichtung eine Beleuchtungseinrichtung und/oder eine Notrufeinrichtung vorzusehen, um auf eine Feuchtigkeitsveränderung und/oder eine Druckkraftänderung aufmerksam zu machen.

Die Benachrichtigungseinrichtung kann als Anzeigeeinheit ausgebildet sein oder eine Anzeigeeinheit aufweisen. Die Anzeigeeinheit dient zur Darstellung des zeitlichen Verlaufs der mit dem Detektorelement ermittelten Intensitäten des durch die polymeroptische Lichtleitfaser geleiteten Lichts. Die Anzeigeeinheit kann außerdem zur grafischen beziehungsweise visuellen Darstellung einer erkannten Feuchtigkeitsveränderung und/oder einer erkannten Druckkraftveränderung vorgesehen sein. Nach einer weiteren vorteilhaften Ausgestaltung kann die Benachrichtigungseinrichtung mit einem mobilen Anzeigegerät gekoppelt sein, so dass eine Druckkraftveränderung und/oder eine Feuchtigkeitsveränderung zur Anzeige an das mobile Anzeigegerät übertragen werden kann.

Gemäß einer weiteren vorteilhaften Ausgestaltung der erfindungsgemäßen Sensoreinrichtung können die Lichtquelle, das Detektorelement, die Auswertungseinrichtung und die Benachrichtigungseinrichtung auf einer gemeinsamen Platine untergebracht sein. Somit bilden die elektronischen und optoelektronischen Elemente eine von dem Sensorelement trennbare Einheit, was sich vorteilhaft auf die Handhabung des erfindungsgemäßen Sensorsystems auswirkt.

Das erfindungsgemäße Sensorsystem ermöglicht eine Bestimmung von Druckkraftveränderungen und Feuchtigkeitsveränderungen auf eine Unterlage, wodurch sich das Sensorsystem insbesondere zur Überwachung von Erfordernissen der Pflege und der medizinischen Versorgung eines Patienten eignet. Vorgeschlagen wird daher weiterhin ein Verfahren zur Anwendung des erfindungsgemäßen Sensorsystems zur Überwachung von Erfordernissen der Pflege und der medizinischen Versorgung eines Patienten. Bei dem erfindungsgemäßen Verfahren wird das Licht einer Lichtquelle in ein Ende der polymeroptischen Lichtleitfaser des in einer flächigen textilen Patientenunterlage integrierten strangförmigen Sensorelements eingekoppelt und an dem anderen Ende der polymeroptischen Lichtleitfaser zumindest eine durch einen Flüssigkeitskontakt mit dem Sensorelement und/oder eine auf einer Querschnittsdeformation des Sensorelements beruhenden Intensitätssignalveränderung des durch die polymeroptische Lichtleitfaser geleiteten Lichts mit dem Detektorelement erfasst, wobei einer erfassten Intensitätssignalveränderung anhand ihres zeitlichen Verlaufs zumindest ein Feuchtigkeitsereignis und/oder ein Patientenbewegungsereignis zugeordnet wird/werden, wobei ein zugeordnetes Feuchtigkeitsereignis und/oder ein zugeordnetes Patientenbewegungsereignis mit der Benachrichtigungseinrichtung angezeigt wird/werden.

Bei der Auswertung der von dem Sensorelement gelieferten Intensitätssignale können wiederkehrende Intensitätssignalveränderungen mit kurzem Zeitintervall einer Patientenbewegung eines sich auf der Patientenunterlage befindlichen Patienten zugeordnet werden. Darüber hinaus können wiederkehrende Intensitätssignalveränderungen mit kurzem Zeitintervall auch einer Atemfrequenz eines sich auf der Patientenunterlage befindlichen Patienten zugeordnet werden, so dass das erfindungsgemäße Sensorsystem zur Überwachung der Atmung eines Patienten eingesetzt werden kann. Ferner ist daran gedacht, Unregelmäßigkeiten einer Atemfrequenz zu erkennen und gegebenenfalls ein medizinisches Versorgungserfordernis anzuzeigen. Gleichermaßen kann ein Bewegungsmangel erkannt werden, um einer Gefahr des Wundliegens eines Patienten vorzubeugen. Im Falle eines erkannten Bewegungsmangels kann mit der Benachrichtigungseinrichtung eine entsprechende Meldung eines Pflegeversorgungserfordernisses angezeigt werden.

Gemäß einer Ausführungsvariante des erfindungsgemäßen Verfahrens kann es vorgesehen sein, dass ein Feuchtigkeitsereignis auf der Patientenunterlage infolge einer durch eine Flüssigkeitsquellung des Sensorelements verursachte Querschnittsdeformation der polymeroptischen Lichtleitfaser ermittelt wird. Ein Feuchtigkeitsereignis kann wiederum als Pflegeversorgungserfordernis mit der Benachrichtigungseinrichtung angezeigt werden.

Gemäß einer weiteren Ausführungsvariante des erfindungsgemäßen Verfahrens kann es vorgesehen sein, dass eine Temperaturänderung auf der Patientenunterlage infolge einer durch eine Ausdehnung des Trägermaterials verursachte Querschnittsdeformation der polymeroptischen Lichtleitfaser ermittelt wird.

Es besteht außerdem die Möglichkeit, dass anhand eines Patientenbewegungsereignisses ein Verlassen der Patientenunterlage erkannt wird, wobei ein Verlassen der Patientenunterlage ein Einschalten von Beleuchtungselementen einer Beleuchtungseinrichtung bewirkt. Das Einschalten von Beleuchtungselementen als Reaktion auf ein Verlassen der Patientenunterlage dient vorteilhafterweise zur Orientierung eines Patienten. Alternativ oder zusätzlich kann nach einer vorgebbaren Zeit ein Notruf ausgelöst werden. Weiter kann es vorgesehen sein, dass der Notruf nach einer vorgebbaren Zeit ausgelöst wird, wenn eine Wiederkehr eines Patienten auf der Patientenunterlage nicht festgestellt werden kann.

Statusmeldungen betreffend ein Feuchtigkeitsereignis, ein Patientenbewegungsereignis und/oder eine Temperaturänderung können über ein Drahtlosnetzwerk zur Anzeige an eine zentrale oder mobile Anzeigeeinheit übermittelt werden, wodurch eine Fernüberwachung gewährleistet ist.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Figur 1:: eine schematische Darstellung eines Ausführungsbeispiels eines Sensorelements des erfindungsgemäßen Sensorsystems,
- Figur 2:: schematische Darstellungen von drei Ausführungsvarianten a, b und c des Sensorelements jeweils im Querschnitt,
- Figuren 3a - 3d:: schematische Darstellungen des Sensorelements zur Erläuterung der Funktionsweise des erfindungsgemäßen Sensorsystems,
- Figur 4:: eine schematische Darstellung von Komponenten des erfindungsgemäßen Sensorsystems.

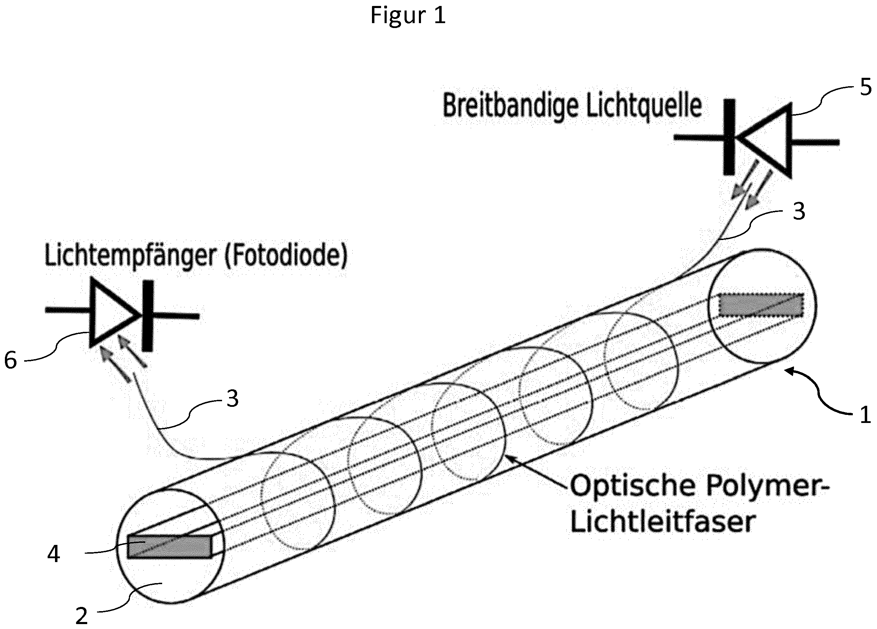

Figur 1 zeigt eine schematische Darstellung eines Ausführungsbeispiels eines Sensorelements 1 des erfindungsgemäßen Sensorsystems zum Überwachen von Druckkraft- und Feuchtigkeitsveränderungen auf eine textile Unterlage. Das erfindungsgemäße Sensorelement 1 ist mit einem strangförmigen elastischen Trägermaterial 2 und einer auf dem Trägermaterial 2 angeordneten polymeroptischen Lichtleitfaser 3 gebildet, wobei das Trägermaterial 2 und die polymeroptische Lichtleitfaser 3 durch ein Kern-Mantel-Verfahren (KEMAFIL) miteinander verbunden sind. Die polymeroptische Lichtleitfaser 3 ist vorzugsweise spiralförmig gleichmäßig um das im Querschnitt runde Trägermaterial 2 gewickelt, wobei sich die Wickelungen der polymeroptischen Lichtleitfaser 3 nicht kreuzen.

Mit dem Bezugszeichen 5 ist eine breitbandige Lichtquelle gekennzeichnet, die zur Lichteinkopplung mit einem Ende der polymeroptischen Lichtleitfaser 3 des Sensorelements 1 über eine Steckverbindung verbunden ist. Die polymeroptische Lichtleitfaser 3 kann im Kern vorzugsweise aus Polymethylmethacrylat, Polyacrylat 6.6, oder Polypropylen gebildet sein. Vorzugsweise weist die polymeroptische Lichtleitfaser 3 keinen Mantel auf, um eine Lichtauskopplung über den Umfang zu ermöglichen. Das Bezugszeichen 6 kennzeichnet ein Detektorelement mit einer Photodiode, die zur Erfassung einer Intensität des durch die polymeroptische Lichtleitfaser 3 geleiteten Lichts eingerichtet ist. Hierzu ist das andere Ende der polymeroptischen Lichtleitfaser 3 mit dem Detektorelement 6 mittels einer Steckverbindung verbunden.

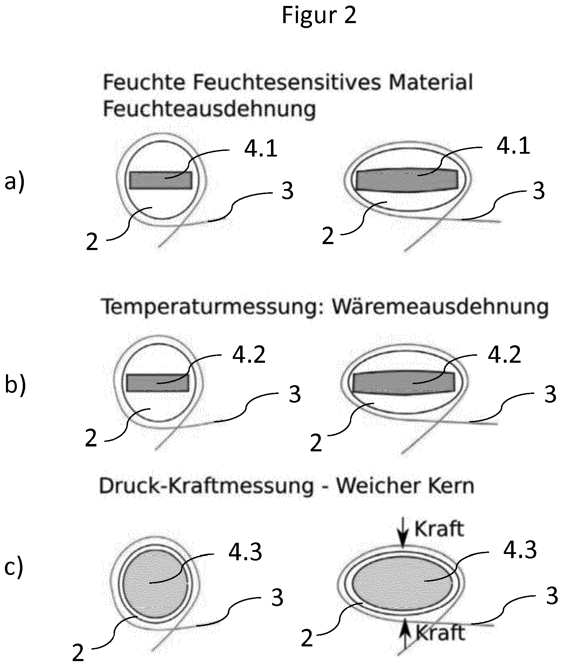

Das Trägermaterial 2 kann mit einem Vollmaterial oder als Schlauch aus Gummi oder Silikon gebildet sein. Darüber hinaus kann das Trägermaterial 2 im Kern ein weiteres Material 4 aufweisen. Erläuterungen zu verschiedenen Kernmaterialien des Sensorelements 1 sind mit den Ausführungen zur Figur 2 angeben.

Aufgrund der strangförmigen elastischen Formgebung des Trägermaterials 2 fügt sich das Sensorelement 1 flexibel in textile Gebilde ein, so dass verschiedene Anordnungen gewählt werden können, um das Sensorelement 1 in eine textile Unterlage zu integrieren. So kann das Sensorelement 1 durch Einweben in eine textile Unterlage integriert werden.

Bestandteil des erfindungsgemäßen Sensorsystems ist außerdem eine Auswertungseinrichtung (nicht gezeigt), die mit dem Detektorelement 6 gekoppelt ist, um die vom Detektorelement 6 gelieferten Lichtintensitätssignale auszuwerten. Die Auswertungseinrichtung erfasst einen zeitlichen Verlauf einer Intensitätssignalveränderung und ordnet einer erfassten Intensitätssignalveränderung eine Feuchtigkeitsveränderung und/oder eine Druckkraftänderung zu. Weiterhin weist das erfindungsgemäße Sensorsystem eine in Figur 1 ebenfalls nicht gezeigte Benachrichtigungseinrichtung auf, mit der eine erkannte beziehungsweise zugeordnete Feuchtigkeitsveränderung und/oder eine Druckkraftänderung angezeigt werden kann/können. Hierzu kann die Benachrichtigungseinrichtung eine Anzeigeeinheit aufweisen, mit der Feuchtigkeitsereignisse und/oder Druckkraftereignisse grafisch darstellbar sind.

Figur 2 zeigt schematische Darstellungen von drei Weiterbildungsvarianten a, b und c des Sensorelements 1 jeweils im Querschnitt. Bei allen Weiterbildungsvarianten a, b, c ist die polymeroptische Lichtleitfaser 3 um das strangförmige elastische Trägermaterial 2 gewickelt, wobei das Trägermaterial 2 jeweils ein zusätzliches Kernmaterial 4.1 bis 4.3 aufweist.

Die Variante a zeigt ein Sensorelement 1 bei dem im Kern des Trägermaterials 2 ein bei Flüssigkeitskontakt quellfähiges Kernmaterial 4.1 angeordnet ist. Bei Variante a führt eine durch Flüssigkeitskontakt mit dem Sensorelement 1 verursachte Flüssigkeitsquellung des Kernmaterials 4.1 zu einer Querschnittsdeformation der auf der Oberfläche des Trägermaterials 2 angeordneten polymeroptischen Lichtleitfaser 3, wodurch Licht über den Umfang der polymeroptischen Lichtleitfaser 3 ausgekoppelt wird, was mit dem Detektorelement 6 erfasst und mit der Auswertungseinrichtung mittels eines vorgegebenen Auswertungsalgorithmus als Feuchtigkeitsereignis erkannt wird.

Bei der Variante b ist im Kern des Trägermaterials 2 ein Kernmaterial 4.2 angeordnet, welches sich temperaturabhängig ausdehnt. Bei der Variante b führt eine durch eine Temperaturänderung verursachte Dehnung des Kernmaterials 4.2 zu einer Querschnittsdeformation der auf der Oberfläche des Trägermaterials 2 angeordneten polymeroptischen Lichtleitfaser 3, wodurch Licht über den Umfang der polymeroptischen Lichtleitfaser 3 ausgekoppelt wird, was mit dem Detektorelement 6 erfasst und mit der Auswertungseinrichtung mittels eines vorgegebenen Auswertungsalgorithmus als Temperaturveränderung erkannt wird.

Bei der Variante c ist im Kern des Trägermaterials 2 ein elastisches Kernmaterial 4.3 angeordnet. Bei Variante c führt eine durch Druckkraftbeanspruchung verursachte Dehnung des Kernmaterials 4.3 zu einer Querschnittsdeformation der auf der Oberfläche des Trägermaterials 2 angeordneten polymeroptischen Lichtleitfaser 3, wodurch Licht über den Umfang der polymeroptischen Lichtleitfaser 3 ausgekoppelt wird, was mit dem Detektorelement 6 erfasst und mit der Auswertungseinrichtung mittels eines vorgegebenen Auswertungsalgorithmus als Druckkraftveränderung erkannt wird.

Das Sensorelement kann aus verschiedenen Kombinationen der vorstehenden Varianten a, b und c gebildet sein, wobei Kombinationen aus a und c sowie b und c bevorzugt sind.

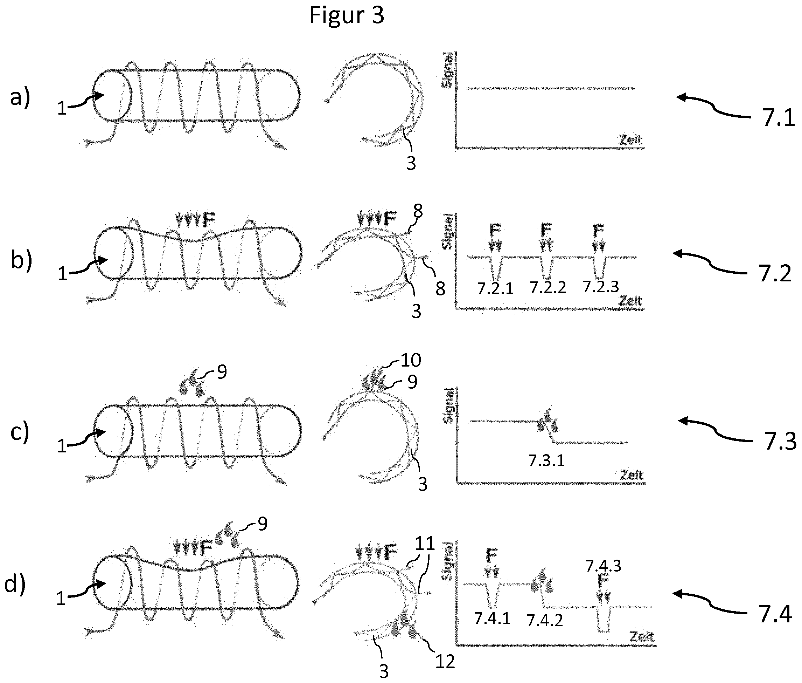

Die Figuren 3a bis 3d zeigen schematische Darstellungen des Sensorelements 1 zur Erläuterung der Funktionsweise des erfindungsgemäßen Sensorsystems, wobei von links nach rechts jeweils eine Längsansicht des Sensorelements 1, ein axialer Querschnitt durch die polymeroptische Lichtleitfaser 3 und ein Verlaufsdiagramm 7.1, 7.2, 7.3 und 7.4 der jeweils mit dem Detektorelement 6 und der Auswertungseinrichtung detektierbaren Intensität des durch die polymeroptische Lichtleitfaser 3 geleiteten Lichts dargestellt sind. Bei den Verlaufsdiagrammen 7.1, 7.2, 7.3 und 7.4 ist das Signal der Lichtintensität im Verhältnis zur Zeit dargestellt.

Zum Überwachen von Druckkraftveränderungen und Feuchtigkeitsveränderungen wird bei dem erfindungsgemäßen Sensorsystem das Licht der breitbandigen Lichtquelle 5 in ein Ende der polymeroptischen Lichtleitfaser 3 des in eine flächige textile Unterlage integrierbaren Sensorelements 1 eingekoppelt und an dem anderen Ende der polymeroptischen Lichtleitfaser 3 mit dem Detektorelement 6 eine Intensität des durch die polymeroptische Lichtleitfaser 3 geleiteten Lichts detektiert. Mit der Auswertungseinrichtung wird der zeitliche Verlauf der von dem Dekorelement 6 gelieferten Intensitätssignale erfasst und ausgewertet. Wird eine Intensitätssignalveränderung erkannt, wird diese anhand ihres zeitlichen Verlaufs einem Feuchtigkeitsereignis beziehungsweise einer Feuchtigkeitsveränderung und/oder einer Druckkraftveränderung zugeordnet.

Figur 3a zeigt eine Darstellung des Sensorelements 1 in einem von Druckkraft entlasteten und trockenen Zustand, so dass, wie der schematischen Darstellung des axialen Querschnitts der polymeroptischen Lichtleitfaser 3 zu entnehmen ist, eine Totalreflexion des in die polymeroptische Lichtleitfaser 3 eingekoppelten Lichts ermöglicht ist. Dementsprechend wird im Diagramm 7.1 keine Veränderung des Intensitätssignals angezeigt, so dass auch keine Ereignisbenachrichtigung erforderlich ist.

Figur 3b zeigt eine Darstellung des Sensorelements 1, wobei eine mit Pfeilen dargestellte Druckkraft F auf das Sensorelement 1 ausgeübt wird, so dass das Trägermaterial 2 und die Anordnung der polymeroptischen Lichtleitfaser 3 verformt werden. Die dabei hervorgerufene Querschnittsdeformation der polymeroptischen Lichtleitfaser 3 bewirkt eine Lichtauskopplung 8 über die Außenfläche der polymeroptischen Lichtleitfaser 3, wie der axialen Querschnittsdarstellung der polymeroptischen Lichtleitfaser 3 zu entnehmen ist. Im Diagramm 7.2 sind die Druckkraftereignisse F auf das Sensorelement in Form von Intensitätssignalveränderungen 7.2.1, 7.2.2 und 7.2.3 dargestellt. Aufgrund ihres zeitlichen Verlaufs können die Intensitätsveränderungen 7.2.1, 7.2.2 und 7.2.3 jeweils Druckkraftveränderungen zugeordnet werden. Bei einer Anwendung des erfindungsgemäßen Sensorsystem in Verbindung mit einer Patientenunterlage kann mit der Auswertungseinrichtung anhand des in Diagramm 7.2 dargestellten Intensitätsverlaufs eine Bewegung eines Patienten oder eine Atmung beziehungsweise eine Atemfrequenz des Patienten erkannt werden.

Figur 3c zeigt eine Darstellung des Sensorelements 1, wobei eine mit Tropfensymbolen 9 auf das Sensorelement 1 wirkende Flüssigkeit dargestellt ist. Der Flüssigkeitskontakt mit der polymeroptischen Lichtleitfaser 3 führt zu einer Änderung der Brechzahl des Umgebungsmediums, so dass es über die Außenfläche der polymeroptischen Lichtleitfaser 3 zu einer Lichtauskopplung 10 kommt, die in dem Diagramm 7.3 als einmalig auftretende Intensitätsveränderung 7.3.1 dargestellt ist.

Figur 3d zeigt eine Darstellung des Sensorelements 1, wobei eine mit Tropfensymbolen 9 auf das Sensorelement 1 wirkende Flüssigkeit dargestellt ist und gleichzeitig eine Druckkraft F auf das Sensorelement 1 einwirkt. Der Flüssigkeitskontakt und die Querschnittsdeformation durch die Druckkrafteinwirkung F verursachen Lichtauskopplungen 11 und 12, welche mit unterschiedlichen zeitlichen Verläufen im Diagramm 7.4 dargestellt sind. Die Intensitätssignalveränderungen 7.4.1 und 7.4.3 sind anhand ihres kurzen Zeitintervalls einer Druckkraftänderung F zuzuordnen, wobei die Intensitätssignalveränderung 7.4.2 aufgrund des einmalig auftretenden und dauerhaften Signals einem Flüssigkeitskontakt beziehungsweise einer Feuchtigkeitsveränderung zuordenbar ist. Vorteilhafterweise kann somit eine Feuchtigkeitsveränderung und eine Druckkraftveränderung mit einem Sensorelement 1 erfasst werden.

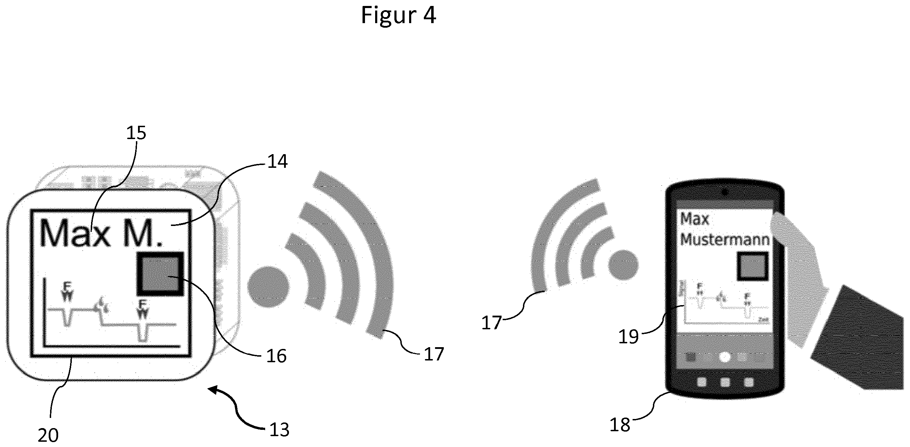

Figur 4 zeigt eine schematische Darstellung von Komponenten des erfindungsgemäßen Sensorsystems in einer Anwendung zur Überwachung von Erfordernissen der Pflege und der medizinischen Versorgung eines Patienten. Mit dem Bezugszeichen 13 ist die Auswertungseinrichtung gezeigt, in die eine Benachrichtigungseinrichtung 14 integriert ist. Mittels einer Anzeigeeinheit 20, welche Bestandteil der Benachrichtigungseinrichtung 14 ist, ist ein Verlaufsdiagramm 7 eines Intensitätssignals dargestellt. Ferner sind mit der Anzeigeeinheit 20 Patienteninformationen, wie der Name eines Patienten 15 und eine Statusmeldung 16 darstellbar, wobei die Statusmeldung 16 ein Feuchtigkeitsereignis und/oder ein Patientenbewegungsereignis anzeigt. Die Benachrichtigungseinrichtung ist über ein Drahtlosnetzwerk 17 mit einem mobilen Endgerät 18 gekoppelt, über dessen Anzeige 19 die Patienteninformationen 15 und Statusmeldungen 16 angezeigt sind.

Als Reaktion auf eine mit dem erfindungsgemäßen Sensorsystem erfasste Druckkraftveränderung oder Feuchtigkeitsveränderung kann eine Benachrichtigung über das Netzwerk 17 an eine Zentrale vorgesehen sein, wobei die Benachrichtigung gleichzeitig einen Notruf auslösen kann. Ferner kann es vorgesehen sein, dass die Benachrichtigungseinrichtung 14 mit einem Beleuchtungssystem gekoppelt ist, welches als Reaktion auf eine mit der Auswertungseinrichtung 13 ermittelte Druckkraftveränderung oder Feuchtigkeitsveränderung eingeschaltet wird.

Es ist daran gedacht, das erfindungsgemäße Sensorsystem in Fahrzeugen zur Müdigkeitserkennung einzusetzen. Integrations- und Anwendungsmöglichkeiten für das erfindungsgemäße Sensorsystem werden außerdem in Verbindung mit Massageliegen, Sturzmatten, Fahrzeugsitzen, Krankentransportmitteln wie Rollstühlen und Sportmatten gesehen.

In der Pflege findet das Sensorsystem Anwendung bei der Patientenüberwachung zur Erfassung von Patientenbewegungen und Feuchtigkeitsereignissen. Anhand von Patientenbewegungen kann eine Atemfrequenz und die Gefahr des Wundliegens überwacht und in Form einer Statusmeldung zentral übermittelt werden.

### Bezugszeichenliste

- 1: Sensorelement
- 2: Trägermaterial
- 3: Polymeroptische Lichtleitfaser
- 4, 4.1 - 4.3: Weiteres Material / Kernmaterial
- 5: Lichtquelle
- 6: Detektorelement / Photodiode
- 7, 7.1 - 7.4: Diagramm
- 7.2.1 - 7.4.3: Intensitätssignalveränderungen
- 8: Lichtauskopplung
- 9: Tropfensymbole
- 10: Lichtauskopplung
- 11: Lichtauskopplung
- 12: Lichtauskopplung
- 13: Auswertungseinrichtung
- 14: Benachrichtigungseinrichtung
- 15: Patienteninformation / Name
- 16: Statusmeldung
- 17: Drahtlosnetzwerk
- 18: Mobiles Endgerät
- 19: Anzeigeeinheit
- 20: Anzeigeeinheit

## Patentansprüche

1. Sensorsystem zum Überwachen von Druckkraft- und Feuchtigkeitsveränderungen auf eine textile Unterlage, aufweisend ein mit einem strangförmigen elastischen Trägermaterial (2) und einer auf dem Trägermaterial (2) angeordneten polymeroptischen Lichtleitfaser (3) gebildetes Sensorelement (1) zur Integration in eine textile Unterlage, wobei die polymeroptische Lichtleitfaser keinen Fasermantel oder einen unterbrochenen Fasermantel aufweist,
eine Lichtquelle (5) die zur Lichteinkopplung mit einem Ende der polymeroptischen Lichtleitfaser (3) verbunden ist,
ein Detektorelement (6), das zur Erfassung eines Intensitätssignals des durch die polymeroptische Lichtleitfaser (3) geleiteten Lichts mit dem anderen Ende der polymeroptischen Lichtleitfaser (3) verbunden ist,
eine Auswertungseinrichtung (13), die dazu eingerichtet ist, anhand der zeitlichen Verläufe der Intensitätssignalveränderungen des von dem Detektorelement (6) gelieferten Intensitätssignals zumindest eine Feuchtigkeitsveränderung und/oder eine Druckkraftveränderung zu identifizieren, und eine Benachrichtigungseinrichtung (14) zum Anzeigen der Feuchtigkeitsveränderung und/oder der Druckkraftänderung.

2. Sensorsystem nach Anspruch 1, **dadurch gekennzeichnet, dass** das Sensorelement (1) unter Ausbildung einer Totalreflexion des in die polymeroptische Lichtleitfaser (3) eingekoppelten Lichts in eine textile Unterlage integrierbar ist.

3. Sensorsystem nach einem der Ansprüche 1 oder 2, **dadurch gekennzeichnet, dass** die polymeroptische Lichtleitfaser (3) um das strangförmige elastische Trägermaterial (2) gewickelt ist.

4. Sensorsystem nach einem der Ansprüche 1 bis 3, **dadurch gekennzeichnet, dass** das strangförmige elastische Trägermaterial (2) ein bei Flüssigkeitskontakt quellfähiges Material (4.1) aufweist.

5. Sensorsystem nach einem der Ansprüche 1 bis 4, **dadurch gekennzeichnet, dass** das strangförmige elastische Trägermaterial (2) ein temperaturabhängig ausdehnbares Material (4.2) aufweist, wobei eine Intensitätssignalveränderung als Temperaturveränderung identifizierbar ist.

6. Sensorsystem nach einem der Ansprüche 1 bis 5, **dadurch gekennzeichnet, dass** die polymeroptische Lichtleitfaser (3) im Kern aus Polymethylmethacrylat, Polyacrylat 6.6, oder Polypropylen gebildet ist.

7. Sensorsystem nach einem der Ansprüche 1 bis 6, **dadurch gekennzeichnet, dass** das Sensorelement (1) in eine textile Unterlage einwebbar ist.

8. Sensorsystem nach einem der Ansprüche 1 bis 7, **dadurch gekennzeichnet, dass** wiederkehrende oder unregelmäßige Intensitätssignalveränderungen als Bewegungen identifizierbar sind.

9. Sensorsystem nach einem der Ansprüche 1 bis 8, **dadurch gekennzeichnet, dass** eine zeitlich einmalig auftretende Intensitätssignalveränderung als Feuchtigkeitsveränderung identifizierbar ist.

10. Sensorsystem nach einem der Ansprüche 1 bis 9, **dadurch gekennzeichnet, dass** die Benachrichtigungseinrichtung einer weiteren technischen Einrichtung koppelbar ist, wobei die weitere technische Einrichtung als Reaktion auf eine Feuchtigkeitsveränderung und/oder eine Druckkraftänderung einschaltbar ist.

11. Sensorsystem nach Anspruch 10, **dadurch gekennzeichnet, dass** die Benachrichtigungseinrichtung über ein Drahtlosnetzwerk mit der weiteren technischen Einrichtung koppelbar ist.

12. Sensorsystem nach einem der Ansprüche 1 bis 11, **dadurch gekennzeichnet, dass** die polymeroptische Lichtleitfaser (3) mittels Steckverbindungen mit der Lichtquelle (5) und dem Detektorelement (6) verbunden ist.

13. Sensorsystem nach einem der Ansprüche 1 bis 12, **dadurch gekennzeichnet, dass** die Lichtquelle (5), das Detektorelement (6), die Auswertungseinrichtung (13) und die Benachrichtigungseinrichtung (14) auf einer gemeinsamen Platine untergebracht sind.

14. Verfahren zur Anwendung des Sensorsystems nach den Ansprüchen 1 bis 13 zur Überwachung von Erfordernissen der Pflege und der medizinischen Versorgung eines Patienten, bei dem das Licht der Lichtquelle (5) in ein Ende der polymeroptischen Lichtleitfaser (3) des in einer flächigen textilen Patientenunterlage integrierten strangförmigen Sensorelements (1) eingekoppelt wird und an dem anderen Ende der polymeroptischen Lichtleitfaser (3) eine durch einen Flüssigkeitskontakt mit dem Sensorelement und/oder eine auf einer Querschnittsdeformation des Sensorelements beruhenden Intensitätssignalveränderung des durch die polymeroptische Lichtleitfaser (3) geleiteten Lichts mit dem Detektorelement (6) erfasst wird und zeitliche Verläufe von Intensitätssignalveränderungen unterschieden werden, wobei einer erfassten Intensitätssignalveränderung anhand ihres zeitlichen Verlaufs zumindest ein Feuchtigkeitsereignis und/oder ein Patientenbewegungsereignis zugeordnet wird/werden, wobei das zugeordnete Feuchtigkeitsereignis und/oder das zugeordnete Patientenbewegungsereignis mit der Benachrichtigungseinrichtung angezeigt wird/werden.

15. Verfahren nach Anspruch 14, **dadurch gekennzeichnet, dass** ein Feuchtigkeitsereignis auf der Patientenunterlage infolge einer durch eine Flüssigkeitsquellung des Sensorelements (1) verursachte Querschnittsdeformation der polymeroptischen Lichtleitfaser (3) ermittelt wird.

16. Verfahren nach Anspruch 14 oder 15, **dadurch gekennzeichnet, dass** eine Temperaturänderung auf der Patientenunterlage infolge einer durch eine Ausdehnung eines Trägermaterials (2, 4.2) verursachte Querschnittsdeformation der polymeroptischen Lichtleitfaser (3) ermittelt wird.

17. Verfahren nach einem der Ansprüche 14 bis 16, **dadurch gekennzeichnet, dass** wiederkehrende Intensitätssignalveränderungen (7.2.1, 7.2.2, 7.2.3, 7.4.1, 7.4.3) mit kurzem Zeitintervall einer Atemfrequenz eines Patienten zugeordnet werden.

18. Verfahren nach einem der Ansprüche 14 bis 17, **dadurch gekennzeichnet, dass** eine einmalige anhaltende Intensitätssignalveränderung (7.3.1; 7.4.2) einem Feuchtigkeitsereignis auf der Patientenunterlage zugeordnet wird.

19. Verfahren nach einem der Ansprüche 14 bis 18, **dadurch gekennzeichnet, dass** anhand eines Patientenbewegungsereignisses ein Verlassen der Patientenunterlage erfasst wird, wobei ein Verlassen der Patientenunterlage ein Einschalten von Beleuchtungselementen bewirkt und/oder nach einer vorgebbaren Zeit einen Notruf auslöst.

20. Verfahren nach einem der Ansprüche 14 bis 19, **dadurch gekennzeichnet, dass** ein Feuchtigkeitsereignis, ein Patientenbewegungsereignis und/oder eine Temperaturänderung über ein Drahtlosnetzwerk zur Anzeige an eine mobile Anzeigeeinheit (19) übermittelt werden.

## Claims

1. A sensor system for monitoring compression force and moisture changes on a textile backing, having
a sensor element (1), formed with a strand-shaped elastic support material (2) and a polymeroptic light-guiding fibre (3) disposed on said support material (2), for integration into a textile backing, said polymeroptic light-guiding fibre having no fibre cladding or a discontinuous fibre cladding,
a light source (5) connected to one end of said polymeroptic light-guiding fibre (3) for light coupling,
a detector element (6) connected to the other end of said polymeroptic light-guiding fibre (3) for detecting an intensity signal of the light guided through said polymeroptic light-guiding fibre (3),
an evaluation apparatus (13) configured to identify at least one moisture change and/or one compression force change based on the time curves of intensity signal changes of said intensity signal delivered by said detector element (6), and
a notification apparatus (14) for displaying said moisture change and/or said compression force change.

2. The sensor system of claim 1, **characterised in that** said sensor element (1) is integrable into a textile backing under formation of a total reflection of said light coupled into said polymeroptic light-guiding fibre (3).

3. The sensor system of any one of claims 1 or 2, **characterised in that** said polymeroptic light-guiding fibre (3) is wound around said strand-shaped elastic support material (2).

4. The sensor system of any one of claims 1 to 3, **characterised in that** said strand-shaped elastic support material (2) has a material (4.1) swellable upon liquid contact.

5. The sensor system of any one of claims 1 to 4, **characterised in that** said strand-shaped elastic support material (2) has a temperature-dependent expandable Material (4.2), wherein an intensity signal change is identifiable as a temperature change.

6. The sensor system of any one of claims 1 to 5, **characterised in that** said polymeroptic light-guiding fibre (3) is in its core formed of polymethyl methacrylate, polyacrylate 6.6 or polypropylene.

7. The sensor system of any one of claims 1 to 6, **characterised in that** said sensor element (1) can be woven into a textile backing.

8. The sensor system of any one of claims 1 to 7, **characterised in that** recurring or irregular intensity signal changes are identifiable as movements.

9. The sensor system of any one of claims 1 to 8, **characterised in that** an intensity signal change occurring once in time is identifiable as a moisture change.

10. The sensor system of any one of claims 1 to 9, **characterised in that** said notification apparatus can be coupled to another technical apparatus, wherein said other technical apparatus can be activated in response to a moisture change and/or a compression force change.

11. The sensor system of claim 10, **characterised in that** said notification apparatus can be coupled to said other technical apparatus via a wireless network.

12. The sensor system of any one of claims 1 to 11, **characterised in that** said polymeroptic light-guiding fibre (3) is connected to said light source (5) and said detector element (6) by means of plug-in connections.

13. The sensor system of any one of claims 1 to 12, **characterised in that** said light source (5), said detector element (6), said evaluation apparatus (13) and said notification apparatus (14) are accommodated on a common circuit board.

14. A method for applying said sensor system of claims 1 to 13 for monitoring prerequisites in the care and medical assistance of a patient, where said light of said light source (5) is coupled into an end of said polymeroptic light-guiding fibre (3) of said strand-shaped sensor element (1) integrated into a planar textile patient backing and on said other end of said polymeroptic light-guiding fibre (3) an intensity signal change, based on a liquid contact with said sensor element and/or a cross section deformation of said sensor element, of said light guided through said polymeroptic light-guiding fibre (3) is detected by said detector element (6) and time curves of intensity signal changes are distinguished, wherein at least a moisture event and/or a patient movement event is/are assigned to a detected intensity signal change based on its time curve, wherein said assigned moisture event and/or said assigned patient movement event is/are displayed by said notification apparatus.

15. The method of claim 14, **characterised in that** a moisture event on said patient backing is determined as a result of a cross section deformation of said polymeroptic light-guiding fibre (3) caused by a liquid swelling of said sensor element (1).

16. The method of claim 14 or 15, **characterised in that** a temperature change on said patient backing is determined as a result of a cross section deformation of said polymeroptic light-guiding fibre (3) caused by an expansion of a support material (2, 4.2).

17. The method of any one of claims 14 to 16, **characterised in that** recurring intensity signal changes (7.2.1, 7.2.2, 7.2.3, 7.4.1, 7.4.3) having a short time interval are assigned to a respiratory rate of a patient.

18. The method of any one of claims 14 to 17, **characterised in that** a non-recurring sustained intensity signal change (7.3.1; 7.4.2) is assigned to a moisture event on said patient backing.

19. The method of any one of claims 14 to 18, **characterised in that** an abandonment of said patient backing is detected based on a patient movement event, wherein an abandonment of said patient backing induces an activation of lightning elements and/or triggers an emergency call after a settable time.

20. The method of any one of claims 14 to 19, **characterised in that** a moisture event, a patient movement event and/or a temperature change are communicated over a wireless network for display on a mobile display unit (19).

## Revendications

1. Système de capteurs pour la surveillance de modifications de pression et d'humidité sur une base textile, présentant
un élément de capteur (1) formé d'un matériau support (2) élastique en forme de boyau et d'une fibre optique polymère (3) disposée sur le matériau support (2) pour l'intégration dans une base textile, dans lequel la fibre optique polymère ne présente aucune enveloppe de fibre ou une enveloppe de fibre interrompue,
une source lumineuse (5) qui est connectée à une extrémité de la fibre optique polymère (3) pour l'injection lumineuse,
un élément de détecteur (6) qui est connecté à l'autre extrémité de la fibre optique polymère (3) pour la détection d'un signal d'intensité de la lumière conduite par la fibre optique polymère (3),
un dispositif d'évaluation (13) qui est configuré pour identifier à l'aide des tracés temporels des modifications de signal d'intensité du signal d'intensité livré par l'élément de détecteur (6) au moins une modification d'humidité et/ou une modification de pression, et
un dispositif de notification (14) pour l'affichage de la modification d'humidité et/ou de la modification de pression.

2. Système de capteurs selon la revendication 1, **caractérisé en ce que** l'élément de capteur (1) peut être intégré en réalisant une réflexion totale de la lumière injectée dans la fibre optique polymère (3) dans une base textile.

3. Système de capteurs selon une des revendications 1 ou 2, **caractérisé en ce que** la fibre optique polymère (3) est enroulée autour du matériau support (2) élastique en forme de boyau.

4. Système de capteurs selon une des revendications 1 à 3, **caractérisé en ce que** le matériau support (2) élastique en forme de boyau présente un matériau (4.1) pouvant gonfler en cas de contact avec un liquide.

5. Système de capteurs selon une des revendications 1 à 4, **caractérisé en ce que** le matériau support (2) élastique en forme de boyau présente un matériau (4.2) pouvant être dilaté en fonction de la température, dans lequel une modification de signal d'intensité peut être identifiée en tant que modification de température.

6. Système de capteurs selon une des revendications 1 à 5, **caractérisé en ce que** la fibre optique polymère (3) est formée dans le noyau de polyméthacrylate de méthyle, polyacrylate 6.6 ou polypropylène.

7. Système de capteurs selon une des revendications 1 à 6, **caractérisé en ce que** l'élément de capteur (1) peut être entrelacé dans une base textile.

8. Système de capteurs selon une des revendications 1 à 7, **caractérisé en ce que** des modifications de signal d'intensité récurrentes ou irrégulières peuvent être identifiées en tant que mouvements.

9. Système de capteurs selon une des revendications 1 à 8, **caractérisé en ce qu'**une modification de signal d'intensité survenant une fois dans le temps peut être identifiée en tant que modification d'humidité.

10. Système de capteurs selon une des revendications 1 à 9, **caractérisé en ce que** le dispositif de notification peut être couplé à un autre dispositif technique, dans lequel l'autre dispositif technique peut être allumé en tant que réaction à une modification d'humidité et/ou une modification de pression.

11. Système de capteurs selon la revendication 10, **caractérisé en ce que** le dispositif de notification peut être couplé à l'autre dispositif technique par le biais d'un réseau sans fil.

12. Système de capteurs selon une des revendications 1 à 11, **caractérisé en ce que** la fibre optique polymère (3) est connectée à la source lumineuse (5) et à l'élément de détecteur (6) au moyen de fiches de raccordement.

13. Système de capteurs selon une des revendications 1 à 12, **caractérisé en ce que** la source lumineuse (5), l'élément de détecteur (6), le dispositif d'évaluation (13) et le dispositif de notification (14) sont hébergés sur une carte imprimée commune.

14. Procédé d'utilisation du système de capteurs selon les revendications 1 à 13 pour la surveillance des exigences en soins et assistance médicale d'un patient, lors duquel la lumière de la source lumineuse (5) est injectée dans une extrémité de la fibre optique polymère (3) de l'élément de capteur (1) en forme de boyau intégré dans une alèse textile plane et une modification de signal d'intensité par un contact avec un liquide avec l'élément de capteur et/ou reposant sur une déformation de section transversale de l'élément de capteur de la lumière conduite par la fibre optique polymère (3) est détectée avec l'élément de détecteur (6) à l'autre extrémité de la fibre optique polymère (3), et des tracés temporels de modifications de signal d'intensité sont distingués, dans lequel au moins un événement d'humidité et/ou un événement de mouvement du patient est/sont associé(s) à une modification de signal d'intensité détectée à l'aide de son tracé temporel, dans lequel l'événement d'humidité associé et/ou l'événement de mouvement du patient associé est/sont affiché(s) avec le dispositif de notification.

15. Procédé selon la revendication 14, **caractérisé en ce qu'**un événement d'humidité sur l'alèse est déterminé à la suite d'une déformation de section transversale de la fibre optique polymère (3) provoquée par un gonflement de liquide de l'élément de capteur (1).

16. Procédé selon la revendication 14 ou 15, **caractérisé en ce qu'**un changement de température sur l'alèse est déterminé à la suite d'une déformation de section transversale de la fibre optique polymère (3) provoquée par une dilatation d'un matériau support (2, 4.2).

17. Procédé selon une des revendications 14 à 16, **caractérisé en ce que** des modifications de signal d'intensité récurrentes (7.2.1, 7.2.2, 7.2.3, 7.4.1, 7.4.3) sont associées à un intervalle de temps court d'une fréquence respiratoire d'un patient.

18. Procédé selon une des revendications 14 à 17, **caractérisé en ce qu'**une modification de signal d'intensité persistante de manière unique (7.3.1 ; 7.4.2) est associée à un événement d'humidité sur l'alèse.

19. Procédé selon une des revendications 14 à 18, **caractérisé en ce qu'**un abandon de l'alèse est détecté à l'aide d'un événement de mouvement du patient, dans lequel un abandon de l'alèse entraîne un allumage d'éléments d'éclairage et/ou déclenche un appel d'urgence après une durée pouvant être prédéfinie.

20. Procédé selon une des revendications 14 à 19, **caractérisé en ce qu'**un événement d'humidité, un événement de mouvement du patient et/ou un changement de température sont transmis pour l'affichage à un module d'affichage mobile (19) par le biais d'un réseau sans fil.
